# EUROPEAN PATENT APPLICATION

(11) **EP 4 597 984 A1**
(43) Date of publication of application: **06.08.2025**
(21) Application number: 23888987.7
(22) Date of filing: 25.10.2023
(51) Int. Cl.: H04L 67/10, H04W 76/15, H04L 69/28, H04L 67/289, H04L 67/51, H04W 88/14

(54) **USER PLANE PATH CONFIGURATION AND INFORMATION PROVISION METHOD FOR SUPPORTING TERMINAL MOBILITY**

(30) Priority: 07.11.2022 KR 20220146958
(71) Applicant: Samsung Electronics Co., Ltd., Suwon-si, Gyeonggi-do 16677 (KR)
(72) Inventor: KIM, Hyesung, Suwon-si Gyeonggi-do 16677 (KR); LEE, Cheolung, Suwon-si Gyeonggi-do 16677 (KR)
(74) Representative: Nederlandsch Octrooibureau
(86) International application number: PCT/KR2023/016658
(87) International publication number: WO 2024/101725

(57) **Abstract**

The present disclosure relates to a 5G or 6G communication system for supporting a higher data transmission rate. The present disclosure provides a method of an EES comprising the steps of: receiving a first message comprising service continuity information and traffic pattern information from an EAS or EEC; confirming whether a source PSA and target PSA simultaneous connection for a PDU session of the EAS or EEC can be supported; if the source PSA and target PSA simultaneous connection can be supported, determining the connection duration of a source PSA, and transmitting, to NEF of a wireless communication network, a second message comprising the connection duration and a source PSA and target PSA simultaneous connection indicator; and transmitting, to the EAS or EEC, a third message comprising the duration of the source PSA connection and whether the source PSA and target PSA simultaneous connection can be supported.

## Description

### [Technical Field]

The disclosure relates to a method for supporting the mobility of a UE, and more particularly, to a method and device for supporting simultaneous connection of a source PSA and a target PSA performed by an edge enabler server and an edge application server of an edge data network.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Detailed Description of the Invention]

### [Technical Problem]

The disclosure relates to a communication system, and deals with a technology for mobile edge computing (MEC) in which to use a low-latency, broad-band service, a UE establishes a data connection to an edge data n-type (EDN) close thereto and accesses an application server running on an edge computing platform or in an edge hosting environment that is operated by the edge enabler server (EES) of the EDN to use a data service.

In some cases, as the UE moves in the edge computing system, the user plane function (UPF) corresponding to the PDU session anchor (PSA) is exchanged. The PSA before the exchange is referred to as a source PSA, and the PSA after the exchange is referred to as a target PSA. A discussion is underway on guaranteeing service continuity by supporting the simultaneous connectivity over the source and target PSA when the UE moves.

However, no definition has been made yet for a method for reflecting the requirements for source user plane (UP) path retention time of the edge application server (EAS)/application client (AC) when generating an application function (AF) request of the EES for requesting the simultaneous connectivity over the source and target PSA. Further, since support for the simultaneous connectivity over the source and target PSA is possible only in session and service continuity (SSC) mode 3 (: make before break mode in which the source PSA is released after connecting with the target PSA to prevent packet loss due to service disconnection when the UE moves) or at the distributed anchor point (which is an edge computing service connectivity model defined in 3GPP TS 23.548 in which the PSA may be changed as the UE moves), no related setting operation has been defined yet.

The disclosure proposes a method for providing, to an edge computing system, information related to a protocol data unit (PDU) session generated by a UE to use an edge computing service, and a method for providing, to the edge computing system, information necessary for maintaining the simultaneous connectivity over the source and target PSA according to the mobility of the UE.

The disclosure proposes a method for transferring PDU session-related information provided by a 3GPP network to an edge application server (EAS).

The disclosure proposes a method for providing information necessary for maintaining the simultaneous connectivity over the source and target PSA to an EES acting as an application function (AF) on behalf of an EAS.

The disclosure proposes a method for providing PDU session-related information to an external edge computing system in a 3GPP core network.

### [Technical Solution]

The disclosure proposes a method of an edge enabler server (EES) to support a user equipment (UE) where a user plane path of a wireless communication network is changed from a source PDU session anchor (PSA) to a target PSA, comprising receiving a first message including service continuity information and traffic pattern information from an edge application server (EAS) or an edge enabler client (EEC), identifying whether simultaneous connectivity of the source and the target PSA for a PDU session of the EAS or the EEC is supportable, in case that the simultaneous connectivity of the source PSA and the target PSA is supportable, determining a connection retention time of the source PSA and transmitting a second message including the connection retention time and an indicator for the simultaneous connectivity of the source PSA and the target PSA to a network exposure function (NEF) of the wireless communication network, and transmitting, to the EAS or the EEC, a third message including whether the simultaneous connectivity of the source PSA and the target PSA is supportable and the connection retention time of the source PSA.

The disclosure proposes a method of an edge enabler client (EEC) to support a user equipment (UE) where a user plane path of a wireless communication network is changed from a source PDU session anchor (PSA) to a target PSA, comprising transmitting a first message including service continuity information and traffic pattern information to an edge enabler server (EES), receiving, from the EES, a second message including whether a simultaneous connectivity of the source PSA and the target PSA for a PDU session of the EEC is supportable and a connection retention time of the source PSA, and transmitting, to an application client (AC), whether the simultaneous connectivity of the source PSA and the target PSA is supportable and the connection retention time of the source PSA.

The disclosure proposes a device of an edge enabler server (EES) to support a user equipment (UE) where a user plane path of a wireless communication network is changed from a source PDU session anchor (PSA) to a target PSA, comprising a transceiver, and a processor configured to control the transceiver to receive a first message including service continuity information and traffic pattern information from an edge application server (EAS) or an edge enabler client (EEC), identify whether simultaneous connectivity of the source PSA and the target PSA for a PDU session of the EAS or the EEC is supportable, in case that the simultaneous connectivity of the source PSA and the target PSA is supportable, determine a connection retention time of the source PSA and transmit a second message including the connection retention time and an indicator for the simultaneous connectivity of the source PSA and the target PSA to a network exposure function (NEF) of the wireless communication network, and transmit, to the EAS or the EEC, a third message including whether the simultaneous connectivity of the source and the target PSA is supportable and the connection retention time of the source PSA.

The disclosure proposes a device of an edge enabler client (EEC) to support a user equipment (UE) where a user plane path of a wireless communication network is changed from a source PDU session anchor (PSA) to a target PSA, comprising a transceiver, and a processor configured to control the transceiver to transmit a first message including service continuity information and traffic pattern information to an edge enabler server (EES), receive, from the EES, a second message including whether a simultaneous connectivity of the source PSA and the target PSA for a PDU session of the EEC is supportable and a connection retention time of the source PSA, and transmit, to an application client (AC), whether the simultaneous connectivity of the source PSA and the target PSA is supportable and the connection retention time of the source PSA.

### [Advantageous Effects]

Information for supporting edge computing service mobility of the UE is provided to the edge computing system so that the service may be provided continuously without interruption even when there is a change in the edge application server providing the service. In particular, the edge computing system of the disclosure may obtain, from an application, information necessary to adjust the retention time for an existing PDU session anchor on the user plane path that occurs simultaneously with a change in an edge application server due to movement of a UE, thereby efficiently performing a simultaneous connection operation of the existing PDU session anchor and a new PDU session anchor through cooperation between the application and a 3GPP core network.

### [Brief Description of Drawings]

FIG. 1 illustrates the hierarchical structure of an edge computing application.
FIG. 2 illustrates a 3GPP network and edge computing server interworking structure according to the disclosure.
FIG. 3 is an example view illustrating a method in which information required for maintaining simultaneous connectivity over the source and target PSA is provided to an EES according to the disclosure.
FIG. 4 illustrates a method for providing information necessary for an operation for simultaneous connectivity over the source and target PSA to an EES according to the disclosure.
FIG. 5 is a view illustrating an example for requesting and providing PDU session information according to the disclosure.
FIG. 6 illustrates a method for requesting and providing PDU session information according to the disclosure.
FIG. 7 is a view illustrating an example of a method for maintaining simultaneous connectivity over the source and target PSA of an EES according to the disclosure.
FIG. 8 is a view illustrating an example of a method for maintaining simultaneous connectivity over the source and target PSA of an EEC according to the disclosure.
FIG. 9 is a view illustrating an example of a configuration of a network entity device according to the disclosure.
FIG. 10 is a view illustrating an example of a device configuration of a UE according to the disclosure.

### [Mode for Carrying out the Invention]

Hereinafter, the operational principle of the disclosure is described below with reference to the accompanying drawings.

In describing the operational principle of the disclosure, the description of technologies that are known in the art and are not directly related to the present invention is omitted. This is for further clarifying the gist of the present disclosure without making it unclear.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present disclosure is not limited to the embodiments disclosed herein, and various changes may be made thereto. The embodiments disclosed herein are provided only to inform one of ordinary skilled in the art of the category of the present disclosure. The present disclosure is defined only by the appended claims.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, according to the disclosure, a 'unit' may include elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments of the disclosure, a "...unit" may include one or more processors.

The terms described below are ones defined considering functions in the disclosure. Since the terms may be varied according to the user's or operator's intent or custom, their definitions should be determined according to the contents throughout the disclosure.

The terms referring to network entities and objects of an edge computing system as used herein, the terms referring to messages, and the term referring to identification information are provided as an example for ease of description. Thus, the disclosure is not limited to the terms, and the terms may be replaced with other terms denoting objects with equivalent technical meanings.

Although terms and names as defined in the 3GPP system standard are used herein for ease of description, embodiments of the disclosure are not limited thereto or thereby, and the same may apply likewise to systems conforming to other standards.

As used herein, the term 'terminal' or 'device' may also be referred to as a mobile station (MS), user equipment (UE), user terminal (UT), terminal, wireless terminal, access terminal (AT), subscriber unit, subscriber station (SS), wireless device, wireless communication device, wireless transmit/receive unit (WTRU), mobile node, or mobile or may be referred to in other terms. Various embodiments of the terminal may include cellular phones, smart phones with wireless communication capabilities, personal digital assistants (PDAs) with wireless communication capabilities, wireless modems, portable computers with wireless communication capabilities, capturing/recording/shooting/filming devices, such as digital cameras, having wireless communication capabilities, game players with wireless communications capabilities, music storage and playback home appliances with wireless communications capabilities, Internet home appliances capable of wireless Internet access and browsing, or portable units or terminals incorporating combinations of those capabilities. Further, the terminal may include a machine to machine (M2M) terminal and a machine-type communication (MTC) terminal/device, but is not limited thereto. In the disclosure, the terminal may be referred to as an electronic device or simply as a device.

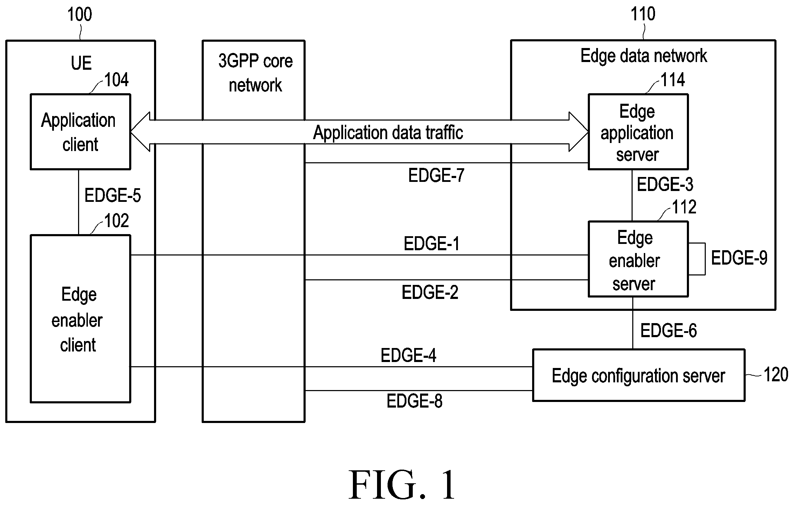

FIG. 1 illustrates the hierarchical structure of an edge computing application.

The network and edge computing entities illustrated in FIG. 1 are described below.

The edge computing system may include at least one of an EES 112, an edge configuration server (ECS) 120, and an edge enabler client (EEC) 102. The EES 112 may build an edge hosting environment or an edge computing platform and is aware of information about the EAS 114 running in the edge hosting environment.

The EES 112 may function to negotiate with the UE to connect the AC 104 of the UE with the EAS 114 in the edge hosting environment. A UE supporting the edge computing system may incorporate an EEC 102. The layer where the EEC 102 and the EAS 114 interwork may be referred to as an edge enabling layer. In the disclosure, the UE incorporating an EEC to configure the edge enabling layer may be an IoT device or a vehicle as well as a smartphone.

The ECS 120 may know deployment information about the EESs 112 and perform a function of transferring configuration information for using the edge computing service to the UE. The configuration information may include at least one of edge data network connection information (e.g., data network name (DNN), single-network slice selection assistance (S-NSSAI), etc.), EDN service area (e.g., cell list, list of tracking area, public land mobile network (PLMN) ID), or EES connection information (e.g., uniform resource identifier (URI)). The EDN service area may be an EES available area established by the EES. Based on the EDN service area, the UE may receive EES information accessible at a specific location. If the ECS may know about the EAS running in the edge hosting environment of a particular EES, the UE may also obtain the information (information about the EAS running in the edge hosting environment of the EES) through the EEC. The layer where the EEC and the ECS interwork may also be included in the edge enabling layer.

The EAS 114 is a third-party application server running in the edge computing system. Since the EAS runs on the infrastructure provided by the edge hosting environment, it may provide an ultra-low latency service at a location close to the UE.

The UE 100 may include at least one of an AC 104, an EEC 102 for linking the AC 104 with the edge computing service, or a mobile terminal (MT) for accessing the wireless communication system. The application of the UE 100 means a client application program that is provided by a third party and is driven in the UE for a specific application service. A plurality of applications may be driven in the UE 100. At least one of these applications may use an MEC service. The EEC 102 in the UE 100 refers to a client that performs an operation in the UE necessary for using the edge computing service. The EEC 102 in the UE 100 may determine what application is able to use the edge computing service and perform the operation of connecting the network interface to allow the data of the AC 104 to be transferred to the EAS 114 providing the edge computing service. The operation for establishing a data connection for using the edge computing service in the UE 100 may be performed, through the MT, in the 3GPP communication layer. The 3GPP communication layer may mean a layer that performs modem operations for using a wireless communication system, and may establish a wireless connection for data communication, register the UE with the wireless communication system, establish a connection for data transmission to the wireless communication system, and transmit/receive data.

In FIG. 1, EDGE-1 to EGGE-8 mean network interfaces (i.e., reference points) between entities and are described in Table 1 below. However, EDGE-1 to EGGE-8 are not limited to the descriptions in Table 1.

**[Table 1]**

| Reference Points | Description |
|---|---|
| EDGE-1 | EDGE-1 reference point enables interactions between the Edge Enabler Server and the Edge Enabler Client. It supports:a) registration and de-registration of the Edge Enabler Client to the Edge Enabler server;b) retrieval and provisioning of Edge Application Server configuration information; and |
| | c) discovery of Edge Application Servers available in the Edge Data Network. |
| EDGE-2 | Edge-2 reference point enables interactions between the Edge Enabler Server and the 3GPP Core Network. It supports access to 3GPP Core Network functions and APIs for retrieval of network capability information |
| EDGE-3 | EDGE-3 reference point enables interactions between the Edge Enabler Server and the Edge Application Servers. It support:a) registration of Edge Application Servers with availability information (e.g. time constraints, location constraints);b) de-registration of Edge Application Servers from the Edge Enabler Server; and |
| | c) providing access to network capability information (e.g. location information). |
| EDGE-4 | EDGE-4 reference point enables interactions between the Edge Configuration Server and the Edge Enabler Client. It supports provisioning of Edge configuration information to the Edge Enabler Client. |
| EDGE-5 | EDGE-5 reference point enables interactions between Application Client(s) and the Edge Enabler Client. |
| EDGE-6 | EDGE-6 reference point enables interactions between the Edge Configuration Server and the Edge Enabler Server. It supports registration of Edge Enabler Server information to the Edge Enabler Network Configuration Server. |
| EDGE-7 | EDGE-7 reference point enables interactions between the Edge Application Server and the 3GPP Core Network. It supports access to 3GPP Core Network functions and APIs for retrieval of network capability information. |
| EDGE-8 | EDGE-8 reference point enables interactions between the Edge |

| | Configuration Server and the 3GPP Core network. |
|---|---|
| EDGE-9 | EDGE-9 reference point enables interactions between two EESs. |
| | EDGE-9 reference point may be provided between EES within different EDN and within the same EDN. |

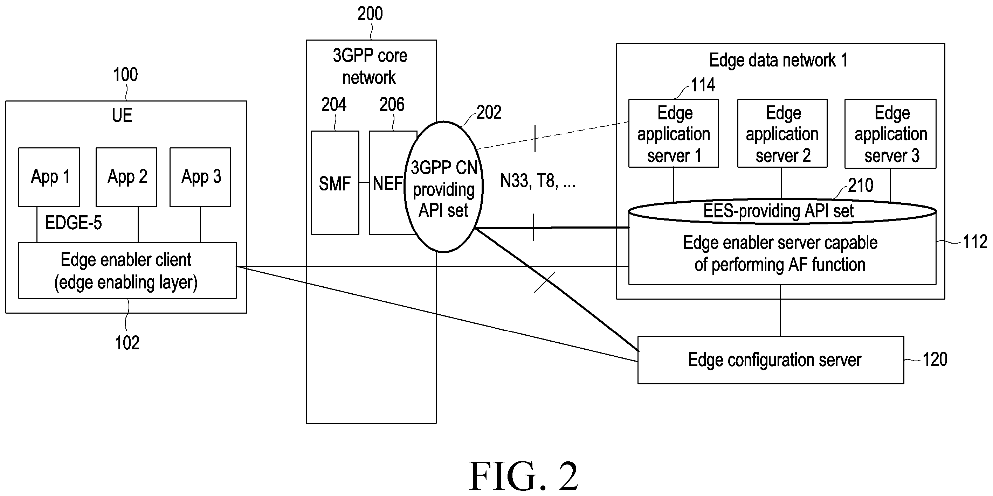

FIG. 2 illustrates a 3GPP network and edge computing server interworking structure according to the disclosure.

As illustrated in FIG. 2, the 3GPP network 200 may provide an application programming interface (API) set 202 that may be used by the AF. The EES 112 or the EAS 114 capable of performing the AF function may interwork with the 3GPP network 200 through the API set 202 provided by the 3GPP network 200. For example, a session management function (SMF) 204 that performs PDU session management may provide a session-related service API to an AF outside the core network 200 through a network exposure function (NEF) 206.

If there is no service level agreement between the EAS provider and the 3GPP network operator, the EAS may indirectly interwork with the 3GPP network 2100 through the API set 210 provided by the EES to which it is registered.

Even when the EAS provider may directly use the API set 202 provided by the 3GPP network 200 because there is a service agreement with the 3GPP network operator, it may indirectly interwork with the 3GPP network 200 through the API set 210 provided by the EES 112 for efficient API use.

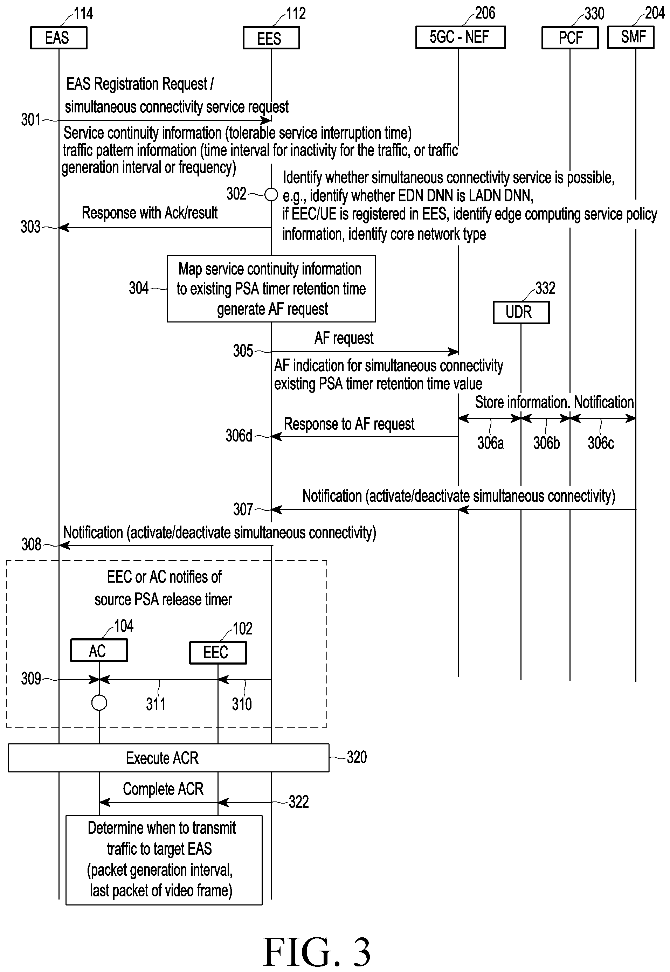

FIG. 3 is an example view illustrating a method in which information required for maintaining simultaneous connectivity over the source and target PSA is provided to an EES according to the disclosure.

In step 301, the EAS 114 may provide the EES 112 with at least one of the following information related to an operation for simultaneous connectivity over the source and target PSA.
- Service continuity information: Tolerable service interruption time (time when the service is not affected despite disconnection of the server-client connection)
- Traffic pattern information: Traffic pattern information about the service provided by the EAS, traffic pattern information between the AC and the EAS, e.g., traffic generation interval/frequency
- Expected context transfer complete time: expected time taken to complete the preparation for providing a service based on context received from the target EAS in an application context relocation (ACR) procedure
- Simultaneous connectivity service request indication: an indicator for requesting an operation of maintaining simultaneous connectivity over the source and target PSA
- Session and service continuity (SSC) mode 3 configuration request indicator
- Service continuity support profile index: an index value for specifying a pre-agreed service continuity support policy/action profile between the EAS provider and the EES provider

The EAS 114 may provide at least one of the information to the EES 112 together with an application identifier, EAS address information and identifier, or a UE identifier.

In step 302, the EES 112 may determine whether a simultaneous connectivity service is required for the corresponding EAS 114 based on the information received from the EAS 114 and the edge computing policy information configured in the EES 112. If it is determined that the simultaneous connectivity service is necessary, the EES 112 may identify whether the simultaneous connectivity service is possible for the EAS 114 in the core network based on the information received from the EAS 114 and the EDN configuration information.

For example, the EES 112 may determine that simultaneous connectivity service guarantee is impossible if the data network name (DNN) of EDN where the EES 112 and the EAS 114 are disposed is a local access data network (LADN) DNN.

Alternatively, when the EAS 114 provides a UE identifier, the EES 112 may identify the core network type (e.g., evolved packet core (EPC) or 5GC (5G core) to which the corresponding UE of the UE identifier is connected, and determine that simultaneous connectivity service may not be provided if the core network type is EPC.

Alternatively, if the edge computing service policy information configured in the EES 112 includes whether to allow a simultaneous connectivity service to be provided to the corresponding UE or the corresponding the EAS 114, the EES 112 may determine whether a simultaneous connectivity service may be provided according to the edge computing service policy information.

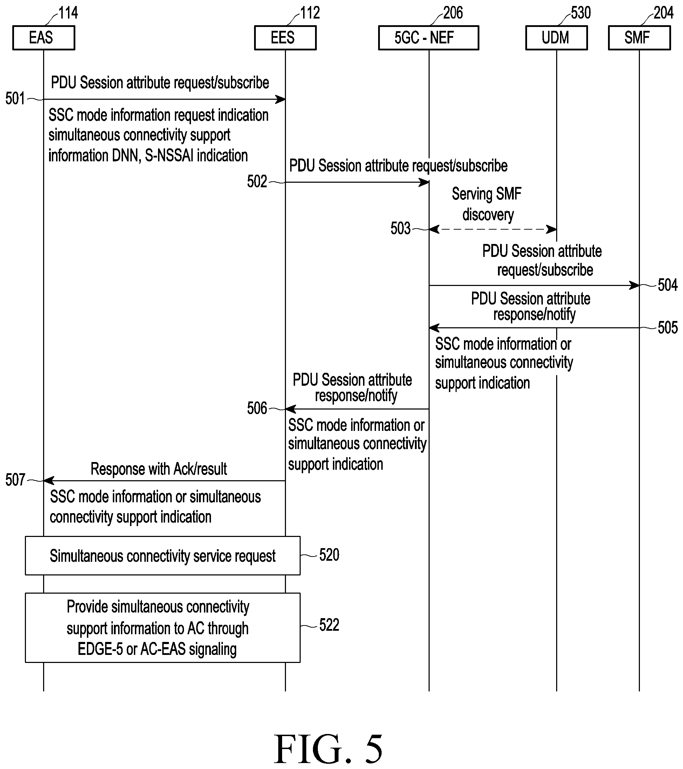

Alternatively, the EES 112 may request and obtain PDU session creation configuration information about the corresponding UE and the EAS 114 from the core network. A detailed procedure where the EES 112 requests and obtains PDU session creation configuration information from the core network is illustrated through FIG. 5. When the PDU session creation configuration information about the UE and the EAS 114 is configured to SSC mode 1 or SSC mode 2 or session breakout is impossible, the EES 112 may determine that the simultaneous connectivity service may not be provided. Conversely, if the PDU session for the corresponding UE and the EAS 114 is SSC mode 3 or session breakout is possible, the EES 112 may determine that the simultaneous connectivity service may be provided.

Alternatively, the EES 112 may determine that it is impossible to provide a simultaneous connectivity service when a connectivity model for an edge computing service is set to multiple PDU session (which is one of the edge computing service connectivity models defined in 3GPP TS 23.548, and uses a different DNN for an individual edge data network).

In step 303, the EES 112 may provide the EAS 114 with whether the simultaneous connectivity service may be provided, as determined in step 302.

In step 304, when determining that support for a simultaneous connectivity service is required for the corresponding UE or the corresponding EAS 114 is required, and support for a simultaneous connectivity service is possible, the EES 112 may generate an indication for simultaneous connectivity over the source and target PSA at edge relocation based on information related to the operation of the simultaneous connectivity over the source and target PSA (received from the EAS in step 301) and determine the existing PSA (source PSA) retention time value.

For example, the EES 112 may determine that support for a simultaneous connectivity service is required when receiving a simultaneous connectivity service request indication, when simultaneous connectivity service support allowed/required information is included in the profile identified through the received service continuity support profile index, or when simultaneous connectivity service support allowed/required information is included in the edge computing service policy information configured in the EES 112.

For example, the EES 112 may determine the existing PSA (source PSA) retention time request value (wait time until the source PSA connection is removed) based on the service continuity information (tolerable service interruption time: time when the service is not affected despite disconnection of the server-client connection), traffic pattern information (e.g., traffic generation interval time), and expected context transfer complete time provided by the EAS 114 and include the time request value in the AF request message transmitted to the core network.

In step 305, the EES 112 may transmit an AF request message including at least one of the generated indication for simplicity over the source and target PSA at edge relocation or the existing PSA (source PSA) retention time value to the NEF 206. The AF request message may further include at least one of an EAS identifier, EAS address information (IP address), an EES identifier (AF identifier), a UE identifier, or an EDN DNN/S-NSSAI value.

In step 306a, the NEF 206 may store information received from the EES 112 in a unified data repository (UDR) 332.

In step 306b, the UDR 332 may transfer information received from the NEF 206 to the policy control function (PCF) 330.

In step 306c, the PCF 330 may generate a related session management policy based on the information received from the UDR 332 and transmit it to the SMF 204.

In these processes 306a, 306b, and 306c, the NEF 206 may determine whether the request of the EES 112 may be processed.

In step 306d, the NEF 206 may transmit whether the request of the EES 112 may be processed as a response message to the AF request message 305.

In step 307, the SMF 204 may determine whether simultaneous connectivity over the source and target PSA at edge relocation is supported based on the information included in the session management policy received through the previous step 306c. The SMF 204 may provide the information about whether it is supported to the EES 112 through the NEF 206. Alternatively, the SMF 204 may provide the EES 112 with information about whether the operation of simultaneous connectivity over the source and target PSA has been activated. Further, when notifying the EES 112 that support for the operation of simultaneous connectivity over the source and target PSA is possible (or activation completed), the SMF 204 may provide the EES 112 with the source PSA retainable time value together with it.

In step 308, the EES 112 may transfer, to the EAS 114, the information about whether simultaneous connectivity over source and target PSAs is supportable or activated, received through the NEF 206. The EES 112 may also transfer, to the EAS 114, the source PSA retainable time received from the NEF 206 together with the information about whether the simultaneous connectivity over the source and target PSA is supportable or activation complete information.

The EAS 114 and the EES 112 may provide at least one of the information about whether the simultaneous connectivity over the source and target PSA is supportable or activation completion, or source PSA retention time value to the AC 104 in the UE receiving a service from the corresponding EAS 114. For example, the EAS 114 may provide the AC 104 with the information about whether the simultaneous connectivity over the source and target PSA is supportable or activation completion and the source PSA retention time received through step 308, through application signaling. Alternatively, at the time of step 308, the EES 112 may directly provide (310) the information about whether the simultaneous connectivity over the source and target PSA is supportable or activation completion and the source PSA retention time value together with at least one of the AC identifier or EAS identifier, EAS address information (IP address) and the EES 102 may transfer (311) the corresponding information to the AC 104 through EDGE-5 interface.

In such a manner, the AC 104 receiving at least one of the information about whether the simultaneous connectivity over the source and target PSA is supportable or activation completion or the source PSA retention time value may determine when the source PSA connection is terminated and when the connection for the source EAS may not be guaranteed in an application context relocation (ACR) procedure 320 and determine when application traffic is to be transmitted to a new target EAS.

For example, the EAS 114 and the EES 112 may complete the ACR operation targeting the EAS to be accessed as the UE moves and then notify the EEC 102 or the AC 104 of the completion of the application context relocation. The AC 104 (or EEC 102) receiving the ACR complete notification 322 may determine whether to transmit, to the target EAS, application traffic to the target EAS immediately or after waiting a certain time. For example, the AC 104 (or the EEC 102) may determine to transmit some packets among the packets generated by the AC 104 and accumulated in the transmission buffer to the source EAS and transmit the remaining packets and packets to be generated in the future to the target EAS or determine to transmit packets, which are waiting for a predetermined time (source PSA retention time) to the source EAS and, after the time, transmit packets to the target EAS. The determination may be performed based on, e.g., the source PSA retention time value received from the EEC 102 or the EAS 114 by the AC 104 and the AC packet generation interval or last packet information (e.g., packet of end of video frame) constituting a specific service frame.

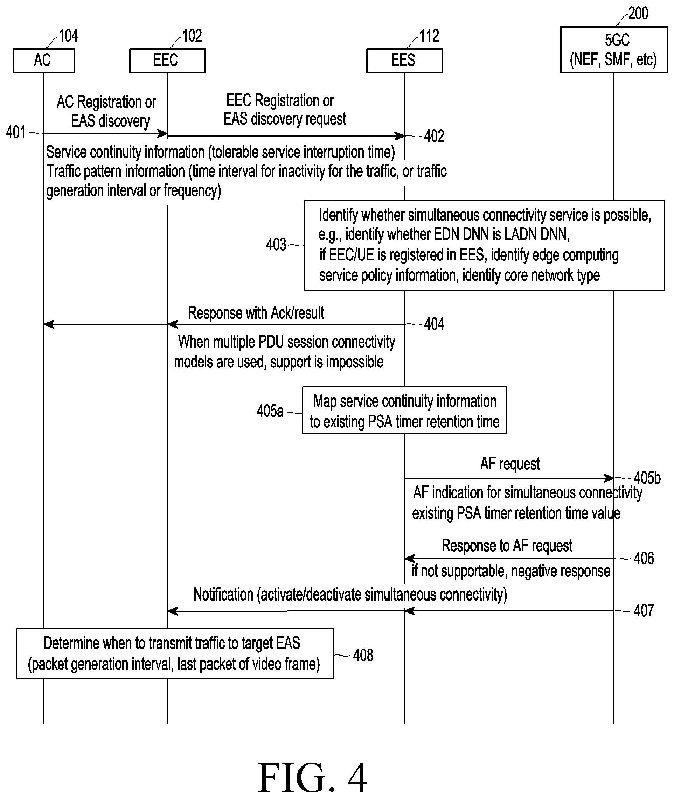

FIG. 4 illustrates a method for providing information necessary for an operation for simultaneous connectivity over the source and target PSA to an EES according to the disclosure.

In step 401, the AC 104 may provide the EEC 102 with at least one of the following information related to AC application service connectivity. For example, the AC 104 may provide the following information together with the AC identifier to the EEC 102 at the request for AC registration or EAS discovery.
- Service continuity information: Tolerable service interruption time (time when the service is not affected despite disconnection of the server-client connection)
- Traffic pattern information: Traffic pattern information about the service provided by the EAS, traffic pattern information between the AC and the EAS, e.g., traffic generation interval/frequency
- Expected context transfer complete time: expected time taken until preparation for providing a service is completed based on a context transmitted from the target EAS in the ACR procedure
- Simultaneous connectivity service request indication: an indicator for operation of simultaneous connectivity over the source and target PSA
- SSC mode 3 configuration request indicator
- Service continuity support profile index: an index value for specifying a service continuity support policy/operation profile pre-agreed between the EAS provider and the EES provider
- DNN and S-NSSAI value configured in the AC

In step 402, the EEC 102 may transfer the information received from the AC 104 to the EES 112. For example, the EEC 102 may include at least one of the information received from the AC 104 in the procedure 401 and the UE identifier and EEC identifier or core network type information in the EEC registration request message or EAS discovery request message and transmit the same to the EES 112. On the other hand, the EEC 102 may perform an EEC registration procedure and an EAS discovery procedure to select an EAS where the EEC 102 may provide a service to the corresponding AC 104 and send the selected EAS in the message provided to the EES 112. Alternatively, the EEC 102 may include at least one of the information received from the AC 104 and the UE identifier and EEC identifier, or the core network type information in the message for providing the selected EAS to the EES 112 and transmit the same.

In step 403, the EES 112 may specify an EAS capable of providing a service to the UE or the AC 104 in the UE based on the information received from the EEC 102 and determine whether support for simultaneous connectivity service is possible for the PDU session between the EAS and the AC 104.

For example, the EES 112 may identify whether the DNN of the EDN is set to LADN and, if LADN, determine that support for the service is impossible.

Alternatively, when the EEC 102 provides the UE identifier, the EES 112 may identify the type (e.g., EPC or 5GC) of the core network to which the UE is connected and, when the type of the core network to which the UE is connected, determine that the simultaneous connectivity service may not be provided.

Alternatively, if the edge computing service policy information configured in the EES 112 includes whether to allow a simultaneous connectivity service to be provided to the corresponding UE or the corresponding AC 104 and EAS, the EES 112 may determine whether a simultaneous connectivity service may be provided according to the edge computing service policy information.

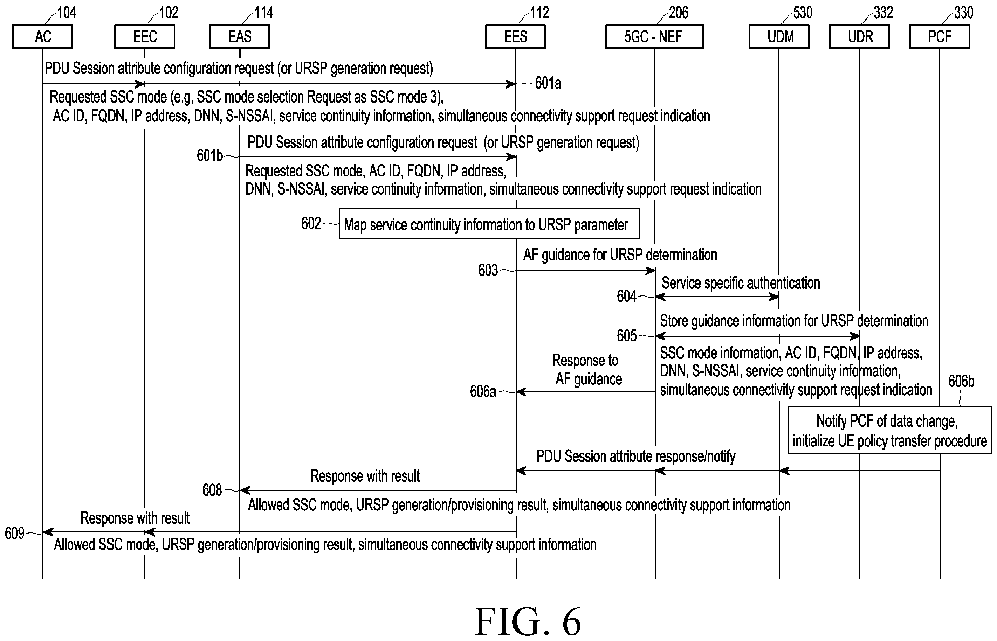

Alternatively, the EES 112 may request and obtain PDU session creation configuration information about the corresponding UE AC 104 and the EAS from the core network. A detailed procedure where the EES 112 requests and obtains PDU session creation configuration information from the core network is illustrated through FIG. 6. When the PDU session creation configuration information about the UE AC 104 and the EAS is configured to SSC mode 1 or SSC mode 2 or session breakout is impossible, the EES 112 may determine that the simultaneous connectivity service may not be provided. Conversely, if the PDU session for the corresponding UE and the EAS is SSC mode 3 or session breakout is possible, the EES 112 may determine that the simultaneous connectivity service may be provided.

Or, when the connectivity model for the edge computing service has multiple PDU session (different DNN is used for an individual edge data network) configured , the EES 112 may determine that the simultaneous connectivity service may not be provided.

Or, the EES 112 may identify and determine whether a simultaneous connectivity service may be provided for the generated PDU session through the DNN and S-NSSAI corresponding to the EDN where the EES 112 and the EAS are disposed or the DNN and S-NSSAI provided by the AC 104.

In step 404, the EES 112 may provide whether the simultaneous connectivity service may be provided, as determined in step 403 to the EEC 102, and the EEC 102 may provide whether the simultaneous connectivity service may be provided, received from the EES 112, to the AC 104.

In step 405a, when determining that support for a simultaneous connectivity service is required for the corresponding UE or the corresponding AC 104 or the EAS providing the service to the AC 104 is required, and support for a simultaneous connectivity service is possible, the EES 112 may generate an indication for simultaneous connectivity over the source and target PSA at edge relocation based on information related to the operation of the simultaneous connectivity over the source and target PSA (received from the AC 104 in procedure 401) and determine the existing PSA (source PSA) retention time value.

For example, the EES 112 may determine that support for a simultaneous connectivity service is required when receiving a simultaneous connectivity service request indication, when simultaneous connectivity service support allowed/required information is included in the profile identified through the received service continuity support profile index, or when simultaneous connectivity service support allowed/required information is included in the edge computing service policy information configured in the EES 112.

For example, the EES 112 may determine the existing PSA (source PSA) retention time request value (wait time until the source PSA connection is removed) based on the service continuity information (tolerable service interruption time: time when the service is not affected despite disconnection of the server-client connection), traffic pattern information (e.g., traffic generation interval time), and expected context transfer complete time provided by the EAS and include the time request value in the AF request message transmitted to the core network.

In step 405b, the EES 112 may transmit, to the core network 200 (e.g., NEF of 5GC), an AF request message including the above-determined indication for simultaneous connectivity over the source and target PSA at edge relocation and the existing PSA (source PSA) retention time value. The AF request message may further include at least one of an AC identifier, an EAS identifier, EAS address information (IP address), an application identifier, an EES identifier (AF identifier), a UE identifier, or an EDN DNN/S-NSSAI value.

The procedure in the core network 200 may be performed as in steps 306a, 306b, and 306c of FIG. 3. In other words, an entity (e.g., the NEF 206) of the core network 200 may store the information received from the EES 112 in the UDR 332, and the UDR 332 may transfer the information to the PCF 330. The PCF 330 may generate a related session management policy based on the information received from the UDR 332 and transmit it to the SMF 204.

In the process 405b, the NEF 206 of the core network 200 may determine whether the request of the EES 112 may be processed.

In step 406, the NEF 206 of the core network 200 may transmit whether the request of the EES 112 is processable, as a response message to the AF request 405b, to the EES 112.

After a PDU session for transmitting traffic between the AC 104 and the EAS is created in the core network 200, in step 407, the entity (e.g., NEF) of the core network 200 may notify the EES 112 of simultaneous connectivity service-related information applied to the PDU session. For example, at least one of the UE identifier, EAS identifier, EAS address information (IP address), application identifier, SSC mode information about the PDU session corresponding to the DNN and S-NSSAI, session breakout support information, and simultaneous connectivity service support information (when the corresponding service is supported, source PSA retention time) included in the AF request message received from the EES 112 in step 405b may be provided from the entity (e.g., NEF or SMF) of the core network 200 to the EES 112. The EES 112 receiving the information from the core network 200 may transfer the information to the EEC 104. Optionally, the EES 112 may provide the corresponding information to all EASs providing the service to the EEC 102 and the AC 104 connected to the EEC 102. Further, the EES 112 may transfer the information, together with the AC identifier, EAS identifier, and EAS address information (IP address), to the EEC 102.

In step 408, the EEC 102 may transfer information about whether the simultaneous connectivity over the source and target PSA is supportable or activation is completed, received from the EES 112, to the AC 104 through an EDGE-5 interface. In such a manner, the AC 104 receiving the information about whether the simultaneous connectivity over the source and target PSA is supportable or activation completion and the source PSA retention time value may determine when the source PSA connection is terminated and when the connection for the source EAS may not be guaranteed in an ACR procedure and determine when application traffic is to be transmitted to a new target EAS.

For example, the EES 112 may complete the ACR operation targeting the EAS to be accessed as the UE moves and then notify the EEC 102 or the AC 104 of the completion of the application context relocation. The AC 104 (or EEC 102) receiving the ACR complete notification may determine whether to transmit, to the target EAS, application traffic to the target EAS immediately or after waiting a certain time. For example, the AC 104 (or the EEC 102) may determine to transmit some packets among the packets generated by the AC 104 and accumulated in the transmission buffer to the source EAS and transmit the remaining packets and packets to be generated in the future to the target EAS or determine to transmit packets, which are waiting for a predetermined time (source PSA retention time) to the source EAS and, after the time, transmit packets to the target EAS. The determination may be performed based on, e.g., the source PSA retention time value received from the EEC 102 or the EAS by the AC 104 and the AC packet generation interval or last packet information (e.g., packet of end of video frame) constituting a specific service frame.

FIG. 5 is a view illustrating an example for requesting and providing PDU session information according to the disclosure.

In step 501, the EAS 114 may transmit a message (e.g., PDU session attribute request message or subscribe request message) requesting information about the PDU session in which transmission/reception traffic is transmitted with the AC in a specific UE, to the EES 112. The message 501 may include at least one of indication to request SSC mode information, indication to request simultaneous connectivity support information, whether LADN is configured (when DNN is set to LADN), or such information request indicator for the configuration applied to the PDU session, the EAS application identifier, UE identifier, EAS IP address, UE IP address, DNN and S-NSSAI, EAS data network access identifier (DNAI) as information for specifying the PDU session. If the EAS 114 desires to continuously receive the information, it may include the information in a subscribe request message and transmit the same to the EES 112.

In step 502, the EES 112 may transmit a PDU session attribute request message (or subscribe request message) to the NEF 206. The request message 502 may include at least one of the information received from the EAS 114 in step 501 (information request indicator for the configuration applied to the PDU session such as indication to request SSC mode information, indication to request simultaneous connectivity support information, and EAS application identifier, UE identifier, EAS IP address, UE IP address, DNN and S-NSSAI, or EAS DNAI as information for specifying the PDU session), and EES identifier (or AF identifier).

In step 503, the NEF 206 may transmit, to the UDM 530, a serving SMF discovery request message to find the SMF 204 that manages the session of the UE (the UE where the AC receiving a service from the EAS is located) to the unified data management (UDM) 530. The serving SMF discovery request message may include at least one of the UE's identifier, UE IP address, EAS identifier, and address information, and DNAI value. The message transmitted to the UDM 530 by the NEF 206 may be a UE context information request message, and the network function (NF) type may be set to SMF. The UDM 530 receiving the serving SMF discovery request from the NEF 206 may provide the NEF 206 with the PDU session identifier and information (address or identifier) about the SMF (serving SMF) 204 that manages the PDU session between the UE/AC and the EAS to the NEF 206.

In step 504, the NEF 206 may transmit a PDU session attribute information providing request message to the serving SMF 204 obtained from the UDM 530. The request message 504 may include at least one of the UE identifier, PDU session identifier, EAS IP address, UE IP address, EAS DNAI value, DNN and S-NSSAI value and the PDU session configuration information indicator (e.g., indication to request SSC mode information, indication to request simultaneous connectivity support information).

In step 505, the SMF 204 may specify a PDU session based on the information received from the NEF 206, specify information requested for the PDU session and provide the same to the NEF 206. For example, according to the PDU session configuration information indicator received from the NEF 206, at least one of the SSC mode information (SSC mode 1, 2, or 3) about the PDU session, simultaneous connectivity support information (whether it is supported and, when supported, the source PSA connection retention time), whether session breakout is supported, and when the DNN is set to LADN may be provided from the SMF 204 to the NEF 206. The information may be mapped to, e.g., the PDU session identifier, UE identifier, EAS IP address, UE IP address, EAS DNAI value, and DNN and S-NSSAI value and be provided to the NEF 206.

In step 506, the NEF 206 may transfer, to the EES, the information received from the SMF 204 (SSC mode information, simultaneous connectivity support information (information about at least one of whether it is supported and, when supported, the source PSA connection retention time), whether session breakout is supported, and whether the DNN is set to LADN), together with the AF identifier, UE identifier, EES identifier, and UE IP address.

In step 407, the EES 112 may provide, to the EAS 114, the information received from the NEF 206 (SSC mode information (SSC mode 1, 2, or 3), simultaneous connectivity support information (information about at least one of whether it is supported and, when supported, the source PSA connection retention time), whether session breakout is supported, and whether the DNN is set to LADN), together with at least one of the UE address and identifier, AC identifier, and EAS identifier.

In step 520, the EAS 114 receiving the PDU session information from the EES 112 may determine whether to perform a simultaneous connectivity service support request operation on the UE/AC. Further, in step 522, the EAS 114 may provide the information received from the EES 112 in step 507 to the connected AC.

FIG. 6 illustrates a method for requesting and providing PDU session information according to the disclosure.

The EES may receive at least one of information about the SSC mode required in the application service, simultaneous connectivity information (tolerable service interruption time: a time when the service is not affected despite disconnection of the server-client connection), simultaneous connectivity support request, or USRP generation request through the method 601a for obtaining through the EEC or the method 601b for obtaining from the EAS.

In step 601a, the AC 104 may provide the EEC 102 with at least one of the requested SSC mode information corresponding to the application service, AC identifier, EAS identifier, UE identifier, fully qualified domain name (FQDN), IP address, DNN, S-NSSAI, service continuity information, indication to request simultaneous connectivity support, or UE route selection policy (URSP) generation request. The AC 104 may transmit the at least one piece of information to the EEC 102 through an AC registration procedure, a service provisioning procedure, or an EAS discovery request procedure. The EEC 102 may generate a PDU session attribute configuration request message or URSP generation request message including the UE identifier and the information received from the AC 104 and transmit the same to the EES 112. The PDU session attribute configuration request message or the URSP generation request message may be provided from the EEC 102 to the EES 112 through a separate procedure or may be provided to the EES through an existing EEC registration or EAS discovery procedure.

In step 601b, the EAS 114 may provide the EES 112 with at least one of the requested SSC mode information corresponding to the application service, AC identifier, EAS identifier, FQDN, IP address, DNN, S-NSSAI, service continuity information, indication to request simultaneous connectivity support, or URSP generation request. The information may be included in a PDU session attribute configuration request message or URSP generation request message and be provided from the EAS 114 to the EES 112. Or, the information may be provided in some message from the EAS 114 to the EES 112 in the existing EAS registration procedure.

In step 602, the EES 112 may generate an AF guidance for URSP determination request message or an AF request to influence traffic routing message based on the information received from the EEC 102 or the EAS 114 in the previous step 601a or 601b. When the EES 112 generates the AF guidance for URSP determination request message, a service parameter may be configured so that the information received from the EEC 102 or the EAS 114 may be included in the traffic descriptor or routing selection descriptor (or component) constituting the URSP. For example, the EES 112 may generate a traffic descriptor including at least one of the AC identifier, FQDN or EAS address information, DNN or S-NSSAI. Further, the EES 112 may generate a route selection component for the SSC mode selection including the requested SSC mode (one of SSC modes 1 to 3) received from the EEC 102 or the EAS 114, a DNN selection component including DNN/S-NSSAI information corresponding to the edge data network, or a route selection component for the network slice selection, and include at least one of the generated component(s) as a service parameter.

In step 603, the EES 112 may transmit service parameters including the generated traffic descriptor and route selection component, in the form of an AF guidance for URSP determination message, to the NEF 206. Further, the EES 112 may transmit, to the NEF 206, at least one of the UE identifier, EES identifier (or AF identifier), EES provider identifier, or DNN and S-NSSAI information corresponding to the edge data network.

In step 604, the NEF 206 may perform authentication (service specific authorization) on whether the URSP may be generated according to the information requested by the UDM 530 and the EES 112. For example, the UDM 530 may determine whether the requested SSC mode may be applied to a specific DNN and S-NSSAI or a session for a specific application and provide whether it is applied to the NEF 206.

In step 605, the NEF 206 may store information received from the EES 112 in the UDR 332 after authentication with the UDM 530 is successfully performed.

In step 606a, the NEF 206 may successfully store the information in the UDR 332 and then provide the result to the EES 112.

In step 606b, the UDR 332 may provide the information received from the NEF 206 to the PCF 330, and the PCF 330 allows a procedure for generating a URSP rule based on the information and transferring it to the UE to be performed. The PCF 330 stored in the UDR 332 may generate a URSP based on the information received from the UDR 332 and transfer the generated URSP rule to the UE. For example, the PCF 330 may include at least one of the AC identifier, FQDN or EAS address information, DNN and S-NSSAI, as the traffic descriptor of the URSP rule. The PCF 330 may include a route selection component for the SSC mode selection including the requested SSC mode (one of SSC modes 1 to 3) in the URSP rule. The PCF 330 may include a route selection component for the DNN selection and network slice selection including the DNN/S-NSSAI information corresponding to the edge data network in the URSP rule.

In step 607, the PCF 330 may notify the EES 112 of the information about whether the URSP generated in the previous step 606b and transmitted to the UE is successfully transferred and applied through the NEF 206. The notification may include information about the transferred and applied URSP. For example, information such as the allowed SSC mode, the successful result of URSP generation and transfer, and simultaneous connectivity support information (whether it is supportable) may be provided to the EES 112.

In step 608, the EES 112 may transmit the information provided from the NEF 206 to the EAS 114. For example, the EES 112 may provide the EAS 114 with information such as the allowed SSC mode, URSP generation and transfer success result, and simultaneous connectivity support information (whether it is supportable).

In step 609, the EES 112 may transmit the information provided from the NEF 206 to the EEC 102 (all EECs having registered to the EES 112 or performed a subscribe request). For example, the EES 112 may provide the EEC 102 with information such as the allowed SSC mode, URSP generation and transfer success result, and simultaneous connectivity support information (whether it is supportable). The EEC 102 receiving the information may transfer the information to the AC 104.

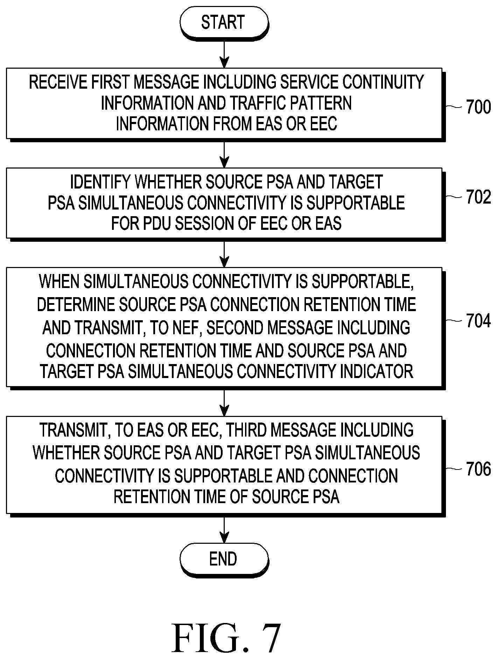

FIG. 7 is a view illustrating an example of a method for maintaining simultaneous connectivity of the source and target PSA of an EES according to the disclosure.

As a UE receiving an edge computing service moves, the user plane path of the wireless communication network may change from a source PSA to a target PSA.

The EES providing an edge computing service to the UE may receive, from the EAS or EEC, a first message including service continuity information and traffic pattern information (700, 301, 402).

The first message may be any one of an EAS registration request message, a simultaneous connectivity service request message, an EEC registration request message, or an EAS discovery request message. The service continuity information may include a tolerable service interruption time. The traffic pattern information may include a traffic generation interval or a traffic generation frequency.

The EES may identify whether the simultaneous connectivity of the source PSA and the target PSA for the PDU session of the EAS or the EEC is supportable.

Identifying whether the simultaneous connectivity of the source PSA and the target PSA for the PDU session of the EAS or the EEC is supportable may be, if a data network name (DNN) of an edge data network (EDN) where the EAS is disposed is a local access data network (LADN), identifying that the simultaneous connectivity of the source PSA and the target PSA is not supportable, identifying a core network type from a UE identifier provided by the EAS and identifying whether the simultaneous connectivity of the source and target PSA is supportable based on the core network type, identifying whether the simultaneous connectivity of the source PSA and the target PSA is supportable based on edge computing service policy information configured in the EES, or obtaining PDU session creation configuration information about the EAS or the EEC from a core network and identifying whether the simultaneous connectivity of the source PSA and the target PSA is supportable based on the obtained PDU session creation configuration information.

When the simultaneous connectivity of the source PSA and the target PSA is supportable, the EES may determine a connection retention time of the source PSA and transmit a second message including the connection retention time and an indicator for the simultaneous connectivity of the source and target PSA to a network exposure function (NEF) of the wireless communication network (704, 305, 405b).

The second message may be an application function (AF) request message. The EES may receive, from an SMF of the wireless communication network, a notification message including information about whether the simultaneous connectivity of the source PSA and the target PSA is supportable or whether the simultaneous connectivity of the source PSA and the target PSA is activated.

The EES may transmit, to the EAS or the EEC, a third message including whether the simultaneous connectivity of the source PSA and the target PSA is supportable and the connection retention time of the source PSA (706, 308, 407).

The EES may execute an application context relocation (ACR) based on whether the simultaneous connectivity of the source PSA and the target PSA is supportable and the connection retention time of the source PSA.

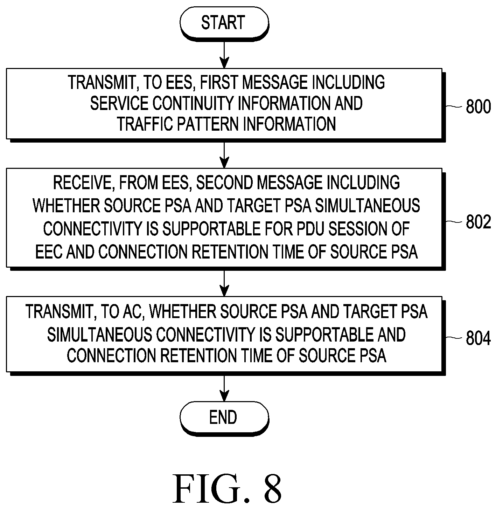

FIG. 8 is a view illustrating an example of a method for maintaining simultaneous connectivity over the source and target PSA of an EEC according to the disclosure.

As a UE receiving an edge computing service moves, the user plane path of the wireless communication network may change from a source PSA to a target PSA.

An EEC provided in the UE and providing an edge computing service to the UE may transmit, to an edge enabler server (EES), a first message including service continuity information and traffic pattern information (800, 301, 402).

The first message may be any one of an EEC registration request message or an EAS discovery request message. The service continuity information may include a tolerable service interruption time. The traffic pattern information may include a traffic generation interval or a traffic generation frequency.

The EEC may receive, from the EES, a second message including whether a simultaneous connectivity of the source PSA and the target PSA for a PDU session of the EEC is supportable and a connection retention time of the source PSA (802, 310, 407).

The EEC may transmit, to an application client (AC), whether the simultaneous connectivity of the source PSA and the target PSA is supportable and the connection retention time of the source PSA (804, 311).

The EEC may execute an application context relocation (ACR) based on whether the simultaneous connectivity of the source PSA and the target PSA is supportable and the connection retention time of the source PSA.

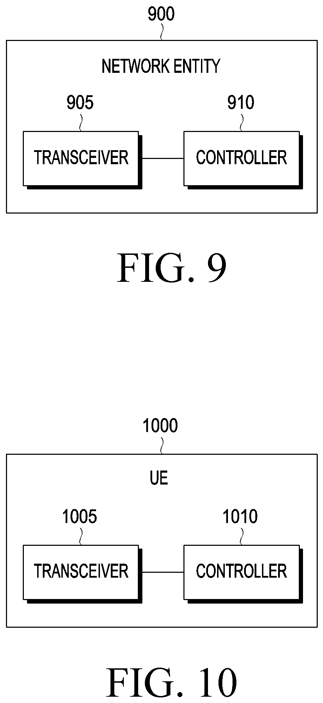

FIG. 9 is a view illustrating an example of a configuration of a network entity device according to the disclosure.

The network entity device illustrated in FIG. 9 may be an entity (e.g., NEF, SMF, PCF, UDR, or UDM) device of a core network illustrated in the disclosure or an entity (e.g., EAS, EES, or ECS) device in the edge computing environment.

The network entity 900 may include a transceiver 905 performing signal transmission/reception with another network entity or a UE and a controller 910 controlling all operations of the network entity 900. All of the methods performed by the entity such as EAS, EAS, NEF, PCF, SMF, UDR, or UDM in the disclosure may be understood as being performed under the control of the controller 910.

The controller 910 and the transceiver 905 are not necessarily implemented as separate devices, respectively, but may be implemented in a single configuration unit in the form of, e.g., a single chip.

The controller 910 may be implemented, as one processor, in the network entity 900.

FIG. 10 is a view illustrating an example of a device configuration of a UE according to the disclosure.

The UE 1000 illustrated in FIG. 10 may be a UE device having the AC or EEC exemplified in the disclosure.

The UE 1000 may include a transceiver 1005 performing signal transmission/reception with another UE or network entity and a controller 1010 controlling all operations of the UE 1000. All of the methods performed by the above-described AC or EEC in the disclosure may be understood as being performed under the control of the controller 1010.

The controller 1010 and the transceiver 1005 are not necessarily implemented as separate devices, respectively, but may be implemented in a single configuration unit in the form of, e.g., a single chip.

The controller 1010 may be implemented, as one processor, in the UE 1000.

It should be noted that the system configuration views, method example views, and device configuration views illustrated in FIGS. 1 to 10 are not intended to limit the scope of the present invention. In other words, all the configurations or operations illustrated in FIGS. 1 to 10 should not be construed as essential components to practice the present invention, and the present invention may be rather implemented with only some of the components without departing from the gist of the present invention.

The methods according to the embodiments descried in the specification or claims of the disclosure may be implemented in hardware, software, or a combination of hardware and software.

When implemented in software, there may be provided a computer readable storage medium storing one or more programs (software modules). One or more programs stored in the computer readable storage medium are configured to be executed by one or more processors in an electronic device. One or more programs include instructions that enable the electronic device to execute methods according to the embodiments described in the specification or claims of the disclosure.

The programs (software modules or software) may be stored in random access memories, non-volatile memories including flash memories, read-only memories (ROMs), electrically erasable programmable read-only memories (EEPROMs), magnetic disc storage devices, compact-disc ROMs, digital versatile discs (DVDs), or other types of optical storage devices, or magnetic cassettes. Or, the programs may be stored in memory constituted of a combination of all or some thereof. As each constituting memory, multiple ones may be included.

The programs may be stored in attachable storage devices that may be accessed via a communication network, such as the Internet, Intranet, local area network (LAN), wide area network (WLAN), or storage area network (SAN) or a communication network configured of a combination thereof. The storage device may connect to the device that performs embodiments of the disclosure via an external port. A separate storage device over the communication network may be connected to the device that performs embodiments of the disclosure.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the present disclosure have been described above, various changes may be made thereto without departing from the scope of the present disclosure. Thus, the scope of the disclosure should not be limited to the above-described embodiments, and should rather be defined by the following claims and equivalents thereof.

## Claims

1. A method of an edge enabler server (EES) to support a user equipment (UE) where a user plane path of a wireless communication network is changed from a source PDU session anchor (PSA) to a target PSA, the method comprising:
receiving a first message including service continuity information and traffic pattern information from an edge application server (EAS) or an edge enabler client (EEC);
identifying whether simultaneous connectivity of the source PSA and the target PSA for a PDU session of the EAS or the EEC is supportable;
in case that the simultaneous connectivity of the source PSA and the target PSA is supportable, determining a connection retention time of the source PSA and transmitting a second message including the connection retention time and an indicator for the simultaneous connectivity of the source PSA and the target PSA to a network exposure function (NEF) of the wireless communication network; and
transmitting, to the EAS or the EEC, a third message including whether the simultaneous connectivity of the source PSA and the target PSA is supportable and the connection retention time of the source PSA.

2. The method of claim 1, wherein the first message is any one of an EAS registration request message, a simultaneous connectivity service request message, an EEC registration request message, or an EAS discovery request message, and
wherein the service continuity information includes a tolerable service interruption time, and
wherein the traffic pattern information includes a traffic generation interval or a traffic generation frequency.

3. The method of claim 1, wherein identifying whether the simultaneous connectivity of the source PSA and the target PSA for the PDU session of the EAS or the EEC is supportable is any one of:
if a data network name (DNN) of an edge data network (EDN) where the EAS is disposed is a local access data network (LADN), identifying that the simultaneous connectivity of the source PSA and the target PSA is not supportable;
identifying a core network type from a UE identifier provided by the EAS and identifying whether the simultaneous connectivity of the source PSA and the target PSA is supportable based on the core network type;
identifying whether the simultaneous connectivity of the source PSA and the target PSA is supportable based on edge computing service policy information configured in the EES; or
obtaining PDU session creation configuration information for the EAS or the EEC from a core network and identifying whether the simultaneous connectivity of the source PSA and the target PSA is supportable based on the obtained PDU session creation configuration information.

4. The method of claim 1, wherein the second message is an application function (AF) request message, and
wherein the method further comprises receiving, from a session management function (SMF) of the wireless communication network, a notification message including information about whether the simultaneous connectivity of the source PSA and the target PSA is supportable or whether the simultaneous connectivity of the source PSA and the target PSA is activated.

5. The method of claim 1, further comprising executing an application context relocation (ACR).

6. A method of an edge enabler client (EEC) to support a user equipment (UE) where a user plane path of a wireless communication network is changed from a source PDU session anchor (PSA) to a target PSA, the method comprising:
transmitting a first message including service continuity information and traffic pattern information to an edge enabler server (EES),
receiving, from the EES, a second message including whether a simultaneous connectivity of the source PSA and the target PSA for a PDU session of the EEC is supportable and a connection retention time of the source PSA; and
transmitting, to an application client (AC), whether the simultaneous connectivity of the source PSA and the target PSA is supportable and the connection retention time of the source PSA.

7. The method of claim 6, wherein the first message is any one of an EEC registration request message or an EAS discovery request message,
wherein the service continuity information includes a tolerable service interruption time, and
wherein the traffic pattern information includes a traffic generation interval or a traffic generation frequency.

8. The method of claim 6, further comprising executing an application context relocation (ACR).

9. The method of claim 6, further comprising determining when to terminate a connection with the source PSA and when to transmit an application traffic to the target EAS based on the connection retention time of the source PSA.

10. A device of an edge enabler server (EES) to support a user equipment (UE) where a user plane path of a wireless communication network is changed from a source PDU session anchor (PSA) to a target PSA, comprising:
a transceiver; and
a processor configured to control the transceiver to receive a first message including service continuity information and traffic pattern information from an edge application server (EAS) or an edge enabler client (EEC), identify whether simultaneous connectivity of the source and the target PSA for a PDU session of the EAS or the EEC is supportable, in case that the simultaneous connectivity of the source PSA and the target PSA is supportable, determine a connection retention time of the source PSA and transmit a second message including the connection retention time and an indicator for the simultaneous connectivity of the source PSA and the target PSA to a network exposure function (NEF) of the wireless communication network, and transmit, to the EAS or the EEC, a third message including whether the simultaneous connectivity of the source PSA and the target PSA is supportable and the connection retention time of the source PSA.

11. The device of claim 10, wherein the first message is any one of an EAS registration request message, a simultaneous connectivity service request message, an EEC registration request message, or an EAS discovery request message,
wherein the service continuity information includes a tolerable service interruption time, and
wherein the traffic pattern information includes a traffic generation interval or a traffic generation frequency.

12. The device of claim 10, wherein the processor is configured to:
if a data network name (DNN) of an edge data network (EDN) where the EAS is disposed is a local access data network (LADN), identify that the simultaneous connectivity of the source PSA and the target PSA is not supportable;
identify a core network type from a UE identifier provided by the EAS and identifying whether the simultaneous connectivity of the source PSA and the target PSA is supportable based on the core network type;
identify whether the simultaneous connectivity of the source PSA and the target PSA is supportable based on edge computing service policy information configured in the EES; and
obtain PDU session creation configuration information for the EAS or the EEC from a core network and identify whether the simultaneous connectivity of the source PSA and the target PSA is supportable based on the obtained PDU session creation configuration information.

13. The device of claim 10, wherein the second message is an application function (AF) request message, and
wherein the processor is configured to receive, from a session management function (SMF) of the wireless communication network, a notification message including information about whether the simultaneous connectivity of the source PSA and the target PSA is supportable or whether the simultaneous connectivity of the source PSA and the target PSA is activated.

14. The device of claim 10, wherein the processor is configured to execute an application context relocation (ACR).

15. A device of an edge enabler client (EEC) to support a user equipment (UE) where a user plane path of a wireless communication network is changed from a source PDU session anchor (PSA) to a target PSA, comprising:
a transceiver; and
a processor configured to control the transceiver to transmit a first message including service continuity information and traffic pattern information to an edge enabler server (EES), receive, from the EES, a second message including whether a simultaneous connectivity of the source PSA and the target PSA for a PDU session of the EEC is supportable and a connection retention time of the source PSA, and transmit, to an application client (AC), whether the simultaneous connectivity of the source PSA and the target PSA is supportable and the connection retention time of the source PSA.
